# EUROPEAN PATENT SPECIFICATION

(11) **EP 4 495 499 B1**
(45) Date of publication and mention of the grant of the patent: **14.05.2025**
(21) Application number: 23186560.1
(22) Date of filing: 19.07.2023
(51) Int. Cl.: F24V 50/00, F28D 1/02

(54) **A FLOATING PLANT FOR GENERATING HEAT AND/OR COOLING AND FOR DIRECT DISTRIBUTION THEREOF OR FOR CONNECTION TO A DISTRICT HEATING AND/OR COOLING SYSTEM**
SCHWIMMENDE ANLAGE ZUR ERZEUGUNG VON WÄRME UND/ODER KÜHLUNG UND ZUR DIREKTEN VERTEILUNG DAVON ODER ZUM ANSCHLUSS AN EIN FERNWÄRME- UND/ODER KÜHLSYSTEM
INSTALLATION FLOTTANTE POUR GÉNÉRER DE LA CHALEUR ET/OU DU REFROIDISSEMENT ET POUR LA DISTRIBUTION DIRECTE DE CELLE-CI OU POUR LA CONNEXION À UN SYSTÈME DE CHAUFFAGE ET/OU DE REFROIDISSEMENT URBAIN

(43) Date of publication of application: 22.01.2025
(73) Proprietor: Kral, Stefan, 15000 Praha (CZ)
(72) Inventor: Kral, Stefan, 15000 Praha (CZ)
(74) Representative: Kendereski, Dusan

(56) References cited:
- WO-A1-2019/162269
- DE-U1- 202014 103 747
- JP-A- 2015 230 133
- US-A1- 2007 280 784

## Description

### Field of technology

The present invention relates to floating plants for community heat and/or cooling production (so-called floating district heating/cooling plants; FDHCP) suitable for district heating/cooling systems and for industrial use, in particular to pontoons and containers at least partially immersed in a water body, using the flow in the water body with and adapted for the efficient exchange of heat between the water body and the heat exchanger circuits of the plant in order to supply heat and cooling to, in particular, buildings and facilities on land.

### Prior art

Water has the largest heat capacity of common substances (4.18 KJ·kg⁻¹·K⁻¹) and is an excellent source and accumulator of heat, buffering circadian and circannual fluctuations in the temperature of the surrounding atmosphere. The dominant heat source of a water body is direct solar radiation incident on the water surface. In urbanised areas, for which the facility is primarily intended, the temperature of the water body is significantly influenced by human activity and interference with the natural water flow - in particular dams, weirs, sewage treatment plants and other pumping and discharge of water from/into the watercourse.

The term "water body" means a natural or artificial water body, flowing or standing, e. g. river, stream, lake, reservoir, sea, ocean, artificial reservoir, etc. The term "building" means a structure for residential, commercial or industrial purposes, e. g. house, apartment, shopping centre, historic building, office building, school, medical facility, office, industrial or manufacturing hall, factory, etc. The term "primary heat exchanger" means a heat exchanger used to exchange heat between the medium (water in a water body) and the heat transfer fluid in the primary circuit.

Heat pump technology is well known in the state of the art. A heat pump is a thermal machine that converts heat from one temperature level to another with external work and generally uses an inverted Carnot cycle with a charge (coolant) circulating between a compressor, condenser, expansion valve and evaporator. The coolant is compressed in the compressor from its gaseous state (using energy from an external source), reducing its volume and heating it rapidly. The coolant is then injected into the condenser, where it gives up its condensation heat to e. g. to heated water for heating, thus cooling and condensing into a liquid. The condensed cooled coolant passes in the liquid state through an expansion valve into the evaporator, with a pressure reduction downstream of the expansion valve, turning the coolant into a gas and consuming the evaporative heat to do so. As a result, the gas is rapidly cooled below ambient temperature and subsequently heated by the heat it receives from its surroundings, thereby cooling the surroundings. The coolant in the gaseous state then proceeds again to the compressor and the cycle is repeated.

The heating capacity of a heat pump (CoP, "coefficient of performance") determines the ratio between the power output and the power input required to operate the heat pump (especially the compressor). The higher the CoP value, the more efficient the heat pump, and in general, water/water heat pumps are 25-35 % more efficient than air/water heat pumps in extracting heat from the environment in winter (air temperature -15 °C and below) and have proportionally lower energy consumption for the same volume of heat produced, and up to 60 % more efficient than air/water heat pumps in cooling in summer (air temperature 30 °C and above) and have proportionally lower energy consumption. This is mainly due to the temperature difference between the environment and the heating/cooling medium and the efficiency of heat extraction/transfer (especially by convection) - in winter, when the air temperature is below 0 °C, the temperature difference between air and the heating medium (heating water) is greater than between the flowing water in the watercourse and the heating medium. In summer - when producing cooling for refrigeration - the temperature difference between the outside air and the temperature of the cooling medium is also greater than between the water in the water flow and the temperature of the cooling medium. Less (or no) pumping work is required to transfer heat between the water in the watercourse (with adequate water flow) compared to the work of fans driving ambient air past the primary heat exchanger at the maximum output of these devices. As the performance of the heat pump for heating decreases as the ambient temperature decreases and at the same time the heat demand in buildings is the highest, a bivalent unit is usually connected to the heat pump, which acts as an auxiliary heat source below the so-called bivalent temperature to provide supplementary heating based on a bivalent drive (fossil fuel, electricity, renewable energy, etc.).

The European patent EP 3221655 B1 describes a floating device with a primary heat exchanger in contact with a water body and a heat pump located on land, for providing heating/cooling of a building, including a secondary heat exchange circuit and an open storage tank adapted for supplementary heating of stored water by solar radiation. The floating device also includes an air heat exchanger with an additional parallel heat exchange circuit. The heat transfer fluid (water) is also transported on land to the heat pump via a line to provide heating/cooling to the building. The disadvantage is that the single heat pump is located outside the floating device, which requires structural interventions in the watercourse and in the buildings, higher investment and operating costs and overall lower efficiency of the plant (similar repeated interventions in watercourses, e. g. in historic city centres with a flowing river, are many times impossible). Another disadvantage is that the storage tank is not part of the facility, so it only serves as a heat storage for the primary circuit, not as a water storage for heating/cooling the building, and it also makes impossible to use the top surface of the floating plant for community purposes.

The Russian patent RU 2646684 C1 describes a houseboat with a primary heat exchanger in contact with a water body, a heat pump for providing heating to said houseboat, including a secondary circuit and a heated water storage tank. The disadvantages are that only the heating of the houseboat is provided and that the heat transfer fluid (e. g. water) is only transported within the houseboat and is not used to heat buildings or supply heat and cooling to services and industry on land.

The European patent application EP 2783978 A1 describes a floating device (with a residential/promenade function) with a heat exchanger in contact with a water body and a heat pump for providing heating/cooling to said floating device, including a secondary circuit and a storage tank. The disadvantage is that the heat transfer fluid is only transported within said floating device and does not serve to heat/cool buildings on land.

The international patent application WO 200858533 A3 describes a houseboat with a heat exchanger in contact with a water body, a heat pump and a circulating pump for providing heating/cooling to said houseboat. The disadvantage is that the heat transfer fluid (no specific example given) is only transported within said houseboat and does not serve to heat/cool buildings on land.

Similar devices for generating heat and/or cooling are disclosed in WO 2019162269 A1, JP 2015230133 A, US 20070280784 A1 and DE 202014103747 U1.

Thus, in the state of the art, there is a need to provide a floating plant for community heat and cooling production, storage and distribution on land that is of plug-and-play type, i. e. it does not require construction and installation of the technology itself, and does not require pumping of water from/into the water body or structural interventions to buildings on land, and is easily connected to existing or newly constructed heat and cooling distribution systems on land.

### Summary of the invention

The aim of the invention is to provide an efficient and complex floating plant for the community production, storage and distribution of heat and cooling for heating/cooling of buildings on land and other uses of distributed thermal energy (e. g. in industry, commerce and services), which is easily connectable to existing or newly constructed community heating and cooling distribution systems on land or directly to a single point of consumption (plug-and-play) and does not require the construction of this type of device or structural interventions in buildings on land.

In a first aspect of the present invention, said object is achieved by a floating plant for installing in a water body and for introducing thermal energy into the water body, as well as for extracting thermal energy from the water body, according to claim 1. Advantageous embodiments of the floating plant are described in claims 2 to 13.

This floating plant comprises:
a. a hollow space designed as a functioning vessel or device intended for installation in a water body (in accordance with the relevant floating plant legislation) with installed technology so that said plant floats when installed in the water body;
b. at least one primary heat exchanger (and preferably a battery of multiple primary heat exchangers) which is at least partially immersed in the water body after installation of said plant in said water body and which comprises a first heat transfer fluid inlet and a first heat transfer fluid outlet such that the first heat transfer fluid can flow through the primary heat exchanger immersed in the water body and can transfer heat energy to or extract heat energy from the water body, wherein the first heat transfer fluid is preferably an antifreeze (e. g. for temperatures -10 °C to 20 °C), in particular a mixture of glycol (e. g. ethylene glycol and/or propylene glycol) and water, wherein the primary heat exchanger is located on the outside of said plant (when installed below the water surface), in particular under the bottom and/or on the sides thereof;
c. at least one heat exchanging element, selected from the group comprising a secondary heat exchanger and a heat pump (and preferably a battery of multiple heat pumps or a combination of a secondary heat exchanger and a heat pump), arranged within said plant, wherein the heat exchanging element is connected to the primary heat exchanger such that the first heat transfer fluid can flow through the heat exchanging element while transferring heat energy from the primary heat exchanger to a second heat transfer fluid, or extracting heat energy from the second heat transfer fluid to the primary heat exchanger, wherein the second heat transfer fluid is preferably water in a circuit designed for community heat and/or cooling distribution and/or storage; and
d. at least one storage tank (and preferably a battery of storage tanks) arranged within said plant, wherein the storage tank is connected to the heat exchanging element and is thermally insulated so that the second heat transfer fluid from the heat exchanging element can be stored in the storage tank while maintaining its temperature t₂, and wherein the storage tank is further connectable to a second heat transfer fluid conduit (i. e. heat or cooling conduit), wherein said conduit is routed outside said plant.

The underlying idea of the floating plant according to the present invention consists in the fact that the heat exchanger circuit inside said plant comprises, in addition to the primary heat exchanger, a heat exchanging element (secondary heat exchanger and/or heat pump) and a storage tank, wherein the heat exchanger circuit uses water as a second heat transfer fluid and can therefore be connected directly to the central heat and/or cooling distribution networks on land. The second heat transfer fluid may also be antifreeze or another industrial heat transfer fluid, suitably selected according to the required temperature levels for the specific distribution channel.

This can provide a source of heating/cooling for community use (district heating/cooling) - buildings and businesses on land, e. g. in historic town centres with river/lake/sea waterfront, where there is usually no space for new heating plants. Functionally and performance-wise, comparable district heating plants located in buildings are generally located outside central urbanised areas and thus the supply of heat and/or cooling requires significant requirements for the construction of distribution networks to the point of consumption. Due to its location on a watercourse and the design of a deck as a new community space, the present floating plant may be in close proximity to future consumption, thus requiring typically many times shorter distribution networks than other "urban heat plants". The floating plant in question is a fully flexible, reversible and community-based heat and/or cooling generation facility - locatable, pluggable and disconnectible according to the current needs and requirements of the community or key consumers, with minimal requirements on the distribution network between the point of energy production and consumption. A single 10 MW plant will replace more than a thousand individual air/air heat pumps and air conditioning units located on rooftops and in courtyards in the city centre, and hundreds of gas boilers and other less efficient island technologies for heat and/or cooling generation.

The hollow space meets all requirements for a vessel or device intended to be installed in a water body, the location and operation of any technology located therein (including all fire, health and safety requirements) under the relevant legislation at the point of its mooring and connection to the direct distribution or community distribution network.

The shape, size and location of the primary heat exchangers are always tailored to the specific location of the floating plant in the water body - based in particular on the water flow in the water body at the site, the morphology of the water body bottom at the site and the required performance at the specified water temperature difference in transferring/extracting heat to/from the water body. In the case of lower flows and slower water body flow, the individual primary heat exchangers may be located in an open tube (i. e., a passage tube with both ends open) that includes a flow pump that will accelerate the flow of water from the water body around the primary heat exchanger in the case of lower flow or higher required power - this is done without the need to pump and filter water from the water body to the interior of the floating plant.

A battery of multiple primary heat exchangers and a battery of heat pumps is more advantageous for floating installations than a single primary heat exchanger or heat pump, as it allows heat/cooling to be produced at different temperature levels simultaneously (e. g. a parallel heat supply for heating hot domestic water and at the same time, a cold supply for cooling of buildings in summer) and to continuously service/remove/replace these elements without interrupting operation, typically in the spring/autumn inter-period when heat and cooling requirements are lowest. In the case of heat pumps, this is also for efficiency reasons - e. g. at 10% plant output, it is better to have only one out of ten heat pump compressors operating at 100% than one ten times larger at 10%, as compressor efficiency is highest only from a certain output.

The advantage of said plant according to the present invention is that the entire plant is manufactured by an industrial method, not by a construction method (i. e. with much greater precision, significantly more compact, with shorter, more economical and safer interconnections of the individual technologies), and the plant does not require a building permit, and is manufactured, tested and assembled in a fully controlled and technically equipped industrial plant (a shipyard).

Another advantage of said plant is its flexibility and the possibility of transporting a fully equipped and tested plant to the installation site by water body (watercourses, according to their navigability parameters (width, length, draught), allow efficient transport of much larger technological units than transport by land), and on site it can be immediately connected directly to the central heating and/or cooling supply on land and can produce heat and cooling to the community distribution system immediately after connection. If the water body at the installation site is non-navigable, said plant may also be transported to the installation site by land and only subsequently installed in the water body. The device does not require a building site for installation but is located on a watercourse where there are designated areas for the placement/mooring of comparable floating plant (pontoons, boats, etc.). Flexibility allows for quick connection and disconnection of device, repairs and technology changes in an industrially controlled and fully technical environment (a shipyard).

Another advantage is the absence of the need to pump/discharge water from/into the water body, which is always an intervention in the watercourse (it must meet the legislative and technical requirements of the watercourse manager) and in most countries the pumping of water from the watercourse is subject to charge, which represents an administrative and financial burden for the operator and requires additional energy consumption (pumping water from the water body, usually also its filtration and discharge into the watercourse).

The output of said plant can range, for example, from 500 kWt to 50 MWt (the so-called installed capacity in kilowatts or megawatts for heat production), but even output values outside the range mentioned above are easily achievable by scaling said plant. The design of the primary heat exchangers ensures a low thermal gradient of e. g. 1 to 3 °C (i. e. minimal environmental impact of the device on the water body and its location and immediate surroundings), the water exchange in the water body and the heat transfer is mainly ensured by flow (convection). For example, 1 m³/s of water flow at a cooling rate of 1 °C results in a heat pump output of 4 to 6 MWt (depending on the achieved CoP of the heat pump), while a cooling rate of 3 °C results in a heat pump output of 12 to 18 MWt. Generally speaking, 3 to 7 units of energy in the form of heat/cooling are produced per unit of energy consumed to operate the plant, so the CoP value is 3 to 7.

The size of said plant and the installed capacity is limited only by the energy potential of the watercourse at the installation site, the energy needs of the site and the feasibility and efficiency of building the necessary distribution, and from a certain size onwards it is preferable to place several low-power plant rather than one high-power plant, taking into account the reasonableness of the investment induced in the distribution network, as well as the size and impact of the facility on the environment in which it is installed.

The storage tank increases the efficiency and adaptability to fluctuations in heat and cooling consumption and electricity prices during the day, allows for more continuous operation of the plant, and enables balancing of pressure fluctuations of the heat transfer fluid in the distribution network. The storage tank can be located under the heat pump within the hollow space of said plant, thus providing additional thermal insulation of the heat pump from the water body, while at the same time utilising the space in the watercourse below the floating plant, increasing its draft and stability. The storage tanks allow to compensate for fluctuations in demand (working/operating hours of the connected buildings and plants as well as temperatures between day and night, and thus the need for heat/cooling varies substantially during the day) and to optimally produce heat and/or cooling, producing it e. g. at the time of the lowest electricity price and storing the heat/cooling for peak power for distribution.

In general, each storage tank is connected to one heat exchanging element. In a further embodiment, two storage tanks may also be connected to the same heat pump, provided that the heat pump produces heat and cooling at the same time. The storage tanks allow the thermal energy to be stored at the output level of a particular heat pump and its distribution to be variable, i. e. energy can be distributed simultaneously at different thermal levels and the thermal distribution levels can also change during the day. Some storage tanks have a heat exchanger installed from the primary heat exchanger, which allows the transfer of energy (heating/cooling) directly from the water body, without using the work of the heat machine (heat pump) i. e. in the most efficient way - in a situation where the required temperature of the medium in the community distribution is at the level of the water temperature in the watercourse (e. g. in summer when the water temperature in the water body is at the required temperature for cooling in the community distribution)

In the case of multiple storage tanks, water at different temperatures can be stored in each storage tank, thus supplying heating and cooling to the building simultaneously as required, e. g. at three temperature levels for low-temperature heating at 40 °C (underfloor or underground), for hot water heating at 60 °C and for industrial use at 90 °C (or more), and three temperature levels for ceiling cooling at 17 °C, for fan coil cooling at 6 °C and for industrial cooling at 2 °C. It is also possible to store "residual heat and cooling" at the distribution return, i. e. without consuming energy at the heat pump, e. g. for heating distribution, the 90 °C return can be used for distribution at 60 °C and the return therefrom for distribution at 40 °C, or similarly for cooling distribution, the 2 °C return can be used for distribution at 6 °C, the return therefrom for distribution at 15 °C and the return therefrom for distribution at 20 °C, etc. The need for heating and cooling at different levels can also vary over the course of a day/week, with storage tanks allowing optimisation of production and distribution.

The primary heat exchanger may comprise one or more regions of tubes and/or plates (i. e., a tubular or plate heat exchanger) through which a heat transfer fluid can flow, and which are immersed at least in regions in a water body after installation of said plant. The design, the material used and the construction of the primary heat exchanger tubes and/or plates are determined in particular by the conditions of the water body and the purpose of the floating plant. The design of the heat exchangers is always adapted to the specific location of the device depending on the flow (velocity, direction, variation over the full range of length and depth of the device body), the temperature parameters of the water body at that location (differences in the depth of the future location of the device, including long-term values, e. g. of at least 5 years), the water quality (pollution, water composition and quality, content and nature of organic and inorganic substances in the water, also by season, including possible atypical and seasonal effects), the nature and sustainability of the bottom and surroundings of said plant. In addition to the exchange area and the velocity of the water flow around the primary heat exchanger, which is ensured in particular by the material used, the shape of the heat exchanger and the shape of the bottom and sides of the plant, including e. g. feed channels, or possibly by an open intake device or other means to accelerate the flow of water in the water body around the primary heat exchanger if necessary.

The primary heat exchanger may comprise one or more regions of tubes and/or plates arranged inside, at each end, an open tube provided with a flow pump to accelerate the flow of water from the water body.

Preferably, a first circulating pump is arranged between the primary heat exchanger and the heat exchanging element (i. e. part of the primary heat exchanger circuit) to provide circulation of the first heat transfer fluid, thereby controlling the flow rate of the heat transfer fluid and its temperature gradient as one of the factors of the amount of energy transferred.

The floating plant may include at least one connection of the storage tank to a cooling conduit and at least one connection of the storage tank to a heat conduit, where said conduits are routed outside of said plant (and typically outside of the water body). In a preferred embodiment, the floating plant includes as many connections to a distribution system as there are available on site - ideally 2 or more conduits, typically only one conduit in the case of existing heat distribution systems for originally combustion heat technologies. For newly built distribution systems, it is advisable to build at least two distribution circuits - one for heat distribution and one for cooling distribution in summer and both for heat distribution in winter (which increases the distribution capacity and the possibility to distribute energy at different temperature levels). In case of a requirement/consumer (e. g. industrial consumption), another specifically routed distribution circuit can be added. These are mainly cooling, and hot water conduits (networks) located on land close to a water body. Thus, heat can be transported to/from buildings for heating/cooling using the existing network infrastructure for heat and cooling distribution without additional structural interventions, e. g. without ducts for pumping/discharging water to/from the watercourse and installation of additional heat pumps in the buildings.

The floating plant may comprise a suction device for immersion in the water body adapted to draw water from the water body into a space of a supplementary primary heat exchanger arranged within said plant, within the hollow space, and to generate a flow of water from the water body within the space of the supplementary primary heat exchanger arranged within said plant. This is particularly advantageous in stationary water bodies (e. g. slow flowing rivers or lakes) where it is advantageous to promote heat flow (convection) to/from the water body around the primary heat exchanger at the expense of conduction of heat for more efficient heat exchange. Also, in the case of slower flow or smaller device or higher required power, the primary heat exchanger is shaped to accelerate the flow of water around it, or the flow is accelerated by the placement of flow pumps (suction device).

The floating plant may comprise a protective lining for immersion in the water body, which covers the primary heat exchanger immersed in the water body on at least one side and thereby protects it from damage (e. g. from branches or ice floes drifting in the watercourse or when the device is pulled out of the water body).

The floating plant may also comprise a bivalence unit for generating electricity to said plant and additional (typically peak) heat generation, wherein the bivalence unit is preferably designed as a cogeneration unit for combustion of bioethanol or biogas. This bivalence unit provides electricity to the floating plant (e. g. for the operation of the heat pump and distribution circulating pumps) or is also connected to the onshore electricity grid and supplies additional electricity to the grid.

The plant is moored in the water body and in its operational state is connected to the community heating and cooling distribution system. The mooring is carried out according to the specific location of the plant by means of high-water dolphins, or by means of articulated mooring and/or telescopic mooring, and the connection to the distribution system is made by means of articulated or flexible connections. Such connection and mooring (also called "high mooring") allows to compensate for changes in the level of the water body, e. g. when the river level is low or high. Thus, the floating plant remains in place and produces and distributes energy even in times of increased water level in the water body (e. g. during a flood).

The technologies are located inside the plant (storage tanks, heat pumps, circulating pumps, electrical distribution, measurement and control) or outside the plant below the water surface and fixed to the plant (primary heat exchangers). The top surface of a floating plant above the surface of the water body (deck) may be designed and constructed differently for each plant, depending on its specific location, and may serve other purposes - e. g., as a place with a community function, such as a pontoon, deck, pier, floating island, quay extension or houseboat (with a specific functional use).

It is an object of the invention to provide an efficient method of harnessing the thermal energy potential of a water body using said floating plant for the production and community distribution of heat and cooling.

Thus, it is an object of the invention to provide a method of heating a building or a facility on land using heating/reheating by means of said floating plant.

In a second aspect of the present invention, said object is achieved by the method of claim 14.

This method involves the following steps:
a. installing said plant in the water body such that the primary heat exchanger is immersed in the water body;
b. connecting said plant to the second heat transfer fluid conduit, in particular to the heat conduit outside said plant; and
c. at least temporarily moving the first heat transfer fluid in the primary heat exchanger to transfer heat from the water body to the heat exchanging element (in particular the heat pump), wherein heat energy is transferred from the water body to the first heat transfer fluid and subsequently from the first heat transfer fluid to the second heat transfer fluid via the heat exchanging element such that the second heat transfer fluid is heated, wherein the second heat transfer fluid is transferred directly or via a storage tank and then via the second heat transfer fluid conduit to a heating circuit of the building so as to heat the building, in particular depending on the need for temperature control in the building.

In step b., the second heat transfer fluid conduit refers in particular to the individual point of consumption and/or community heat distribution.

In step c., the second heat transfer fluid is distributed to an individual consumer or connected and distributed in a community distribution system, and further transferred to the heating circuit of the connected buildings or businesses to heat those buildings/businesses, depending in particular on the need for temperature control in the buildings/businesses.

Thus, it is an object of the invention to provide a method of cooling a building or a facility on land using cooling by means of said floating plant.

In a third aspect of the present invention, said object is achieved by a method of cooling buildings or using cooling in another way (industry, commerce, services) by means of said floating plant, according to claim 15.

This method involves the following steps:
a. installing said plant in the water body such that the primary heat exchanger is immersed in the water body;
b. connecting said plant to the second heat transfer fluid conduit, in particular to the cooling conduit outside said plant; and
c. at least temporarily moving the first heat transfer fluid in the primary heat exchanger to transfer heat from the heat exchanging element to the water body, wherein heat energy is transferred from the first heat transfer fluid to the water body and subsequently via the heat exchanging element from the second heat transfer fluid to the first heat transfer fluid such that the second heat transfer fluid is cooled, wherein the second heat transfer fluid is transferred directly or via a storage tank and further via a second heat transfer fluid conduit to a cooling circuit of the building so as to cool the building, in particular depending on the need for temperature control in the building.

In step b., the second heat transfer fluid conduit means in particular the individual point of consumption and/or the community cooling distribution.

In step c., the second heat transfer fluid is distributed directly to the individual consumer or connected to a community cooling distribution system and then transferred to the cooling circuit of the building depending on its cooling needs or to other connected plants for cooling purposes (industry, commerce, services).

### Brief summary of drawings

Figure 1 shows a perspective view of the floating plant as a whole, installed in a water body.
Figure 2 shows a perspective view of the floating plant in an unfolded state, installed in a water body.
Figure 3 schematically shows a heat exchange circuit of a floating plant for heat production from a water body by a heat pump.
Figure 4 schematically shows a heat exchange circuit of a floating plant for producing cooling from a water body by a heat pump.
Figure 5 schematically shows a floating heat exchanger circuit with direct heat/cooling exchange between a water body and a second heat transfer fluid by means of a secondary heat exchanger for distribution (usually cooling), without using the work of a heat engine (heat pump).
Figure 6 shows a side view of some variations of the floating plant mooring by articulated mooring (6A) and telescopic mooring (6B) and the connection to the heat/cool conduits on land.

### Examples

### Example 1

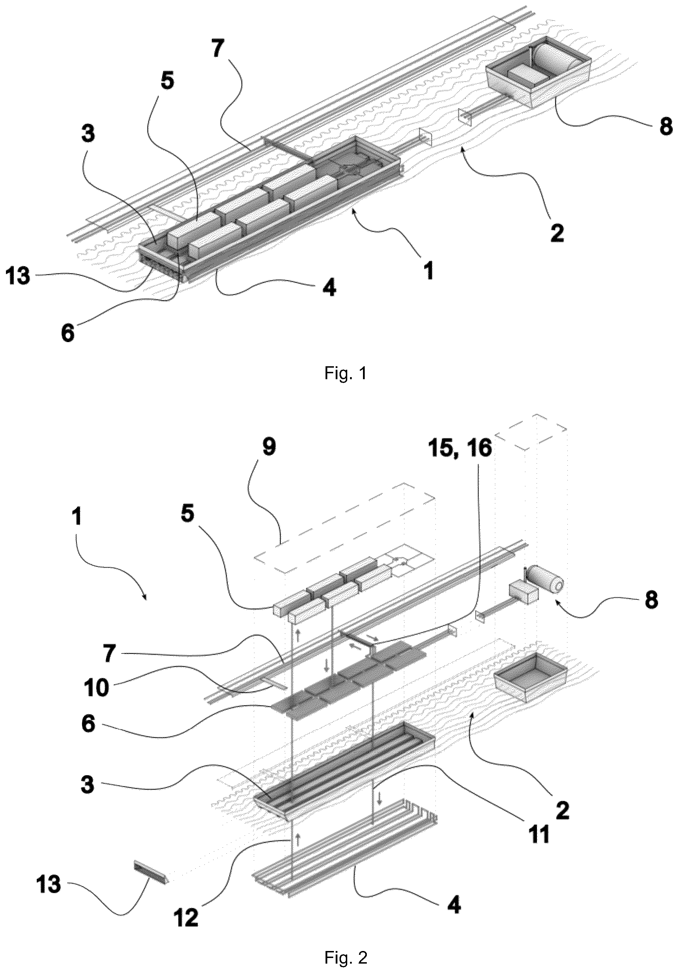

One example embodiment is the floating plant **1** of FIG. 1 (as a whole) and FIG. 2 (in an exploded view). Said floating plant **1** installed in a water body **2** comprises a hollow space **3,** at least one primary heat exchanger **4,** a battery (in the illustrated case six) of heat pumps **5** (preferably a range of e. g. 2 to 10 heat pumps **5**), a battery (in the illustrated case eight) of storage tanks **6,** a top surface **9** and a bivalence unit **8** (which may be implemented as a separate device or as part of the floating plant **1**).

The primary heat exchanger **4,** when installed in the water body **2,** is at least partially immersed in the water body **2** and includes a first heat transfer fluid inlet **11** and a first heat transfer fluid outlet **12** such that the first heat transfer fluid can flow through the primary heat exchanger **4** and can transfer heat energy to the water body **2** or can extract heat energy from the water body **2.** The first heat transfer fluid is an antifreeze (typically a mixture of water and glycol, or other liquid having a freezing point below the freezing point). The primary heat exchanger **4** is arranged on the outside of said plant **1,** in particular below its bottom and/or on its sides below the level of the water body **2.** The primary heat exchanger **4** may comprise one or more regions of tubes and/or plates through which the heat transfer fluid can flow, and which are immersed in the water body **2** at least in regions after installation of said plant **1.** A suction device **13** for immersion in the water body **2** is also provided, which is adapted to suck water from the water body **2** into the space of the primary heat exchanger **4** and to control the flow of water from the water body **2** in the space of the primary heat exchanger **4.** A protective lining (not shown) for immersion in the water body **2** may also be provided, which covers at least one side and thereby protects the primary heat exchanger **4** immersed in the water body **2.**

The heat pump **5** and/or a battery of heat pumps **5** is arranged inside the hollow space **3** of said plant **1,** preferably above the storage tank **6** and below the top surface **9** (deck). The heat pump **5** is connected to the primary heat exchanger **4** such that the first heat transfer fluid can flow through the heat pump **5** and the heat pump can transfer heat energy to or extract heat energy from the second heat transfer fluid. The second heat transfer fluid is degassed water for individual heat/cooling consumption or for community heating and/or cooling (or an industrial heat transfer fluid). Heat energy is transferred to the heat transfer fluid at the condenser **19** side and extracted from the heat transfer fluid at the evaporator **21** side. A first circulation pump **14** is arranged between the primary heat exchanger **4** and the heat pump **5** to provide circulation of the first heat transfer fluid.

The storage tank **6** is arranged inside the hollow space **3** of said plant **1,** preferably below the heat pump **5** and above the primary heat exchanger **4.** The storage tank **6** is connected to the heat pump **5** such that the second heat transfer fluid can be stored in the storage tank **6** to maintain its temperature. The storage tank **6** is further connected (removably) to a second heat transfer fluid conduit **7,** wherein said conduit **7** is routed outside said plant **1.** This connection is made as a connection **15** to the cooling conduit **7** and as a connection **16** to the heat conduit **7.**

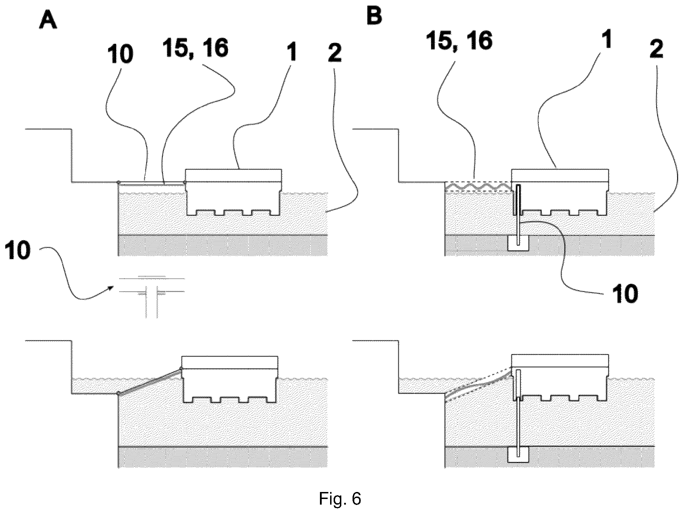

The storage tank **6** (and thus the entire plant **1**) is connectable via the second circulating pump **17** to the second heat transfer fluid conduit **7** by means of articulated mooring **10** (see Figure 6A) and/or telescopic mooring **10** (see Figure 6B).

The bivalence unit **8** for supplying electricity to said plant **1** and further producing heat (in particular for peak heat demand in winter) is preferably designed as a cogeneration unit for burning bioethanol or biogas.

The top surface **9** (deck) covers the technological part of the device - the heat pump **5** and the storage tank **6** and is designed as a fixed deck of a pontoon, a pier, a floating island, a quay extension of the public space or a houseboat.

### Example 2

Said plant **1,** when installed in the water body and connected to the second heat transfer fluid conduit **7,** in particular to the heat conduit **7** routed outside said plant **1,** is capable of ensuring the production and subsequent distribution of heat, at least temporarily, by moving the first heat transfer fluid from the heat pump **5** through the primary heat exchanger **4** and back to the heat pump **5.** Subsequently, in the plant **1,** the heat energy is transferred from the water body **2** to the first heat transfer fluid and then from the first heat transfer fluid to the second heat transfer fluid by the heat pump **5** such that the second heat transfer fluid is heated. The second heat transfer fluid is then transferred directly or via the storage tank **6** and the second heat transfer fluid conduit **7** for consumption - to the heating circuit of buildings to heat the buildings, in particular depending on the need for heat regulation of the buildings and/or for other uses of thermal energy for heating (industry, commerce, services).

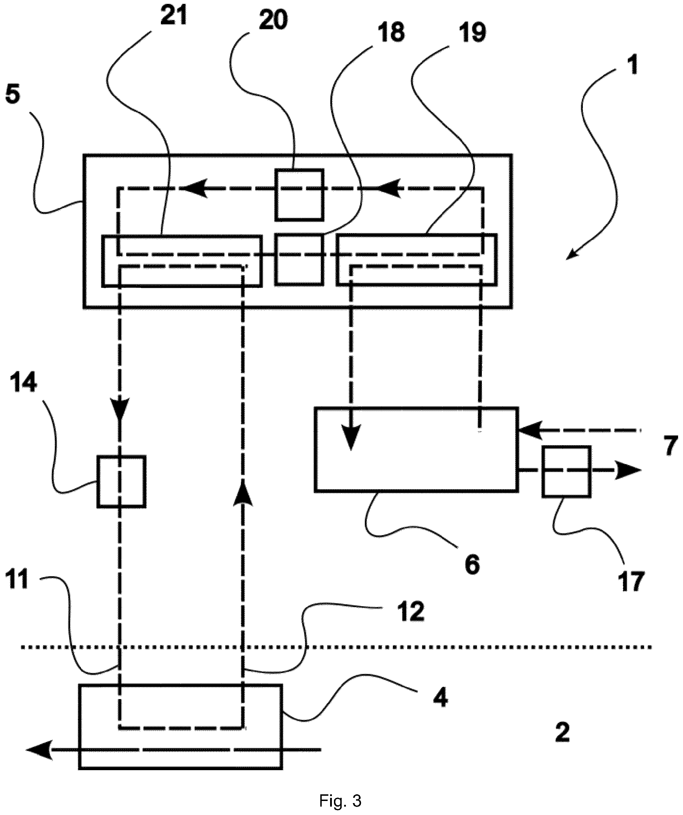

In the heat generation according to Figure 3, heat is exchanged between the water body **2** and the first heat transfer fluid in the primary heat exchanger **4,** thereby cooling the water body **2** and heating the first heat transfer fluid by approximately 1 to 3 °C. The first heat transfer fluid further flows through the outlet **12** to the heat pump **5,** where it cools on the evaporator **21** side and transfers heat via the circuit charge (coolant) of the heat pump **5** (e. g. CO₂ , NH₃) circulating through the compressor **18** to the second heat transfer fluid on the condenser **19** side. The coolant of the heat pump **5** is routed from the condenser **19** back to the evaporator **21** side via the expansion valve **20,** thereby cooling it. The cooled first heat transfer fluid is routed from the heat pump **5** back to the primary heat exchanger **4** via the first circulating pump **14** and the inlet **11,** where it is reheated. The heated second heat transfer fluid is routed from the heat pump **5** to the storage tank **6** and/or further to the heat conduit **7.** In this case, the second heat transfer fluid circulates between the storage tank **6** and the heat pump **5** on the condenser **19** side, and after reaching the desired heating temperature is distributed to the conduit **7** by the second circulation pump **17.**

### Example 3

Said plant **1,** when installed in the water body and connected to the second heat transfer fluid conduit **7,** in particular to the cooling conduit **7** routed outside said plant **1,** is capable of providing cooling to the building by at least temporarily moving the first heat transfer fluid from the heat pump **5** through the primary heat exchanger **4** and back to the heat pump **5.** Subsequently, in said plant **1,** the heat energy from the first heat transfer fluid is transferred to the water body **2** and then, by means of the heat pump **5,** from the second heat transfer fluid to the first heat transfer fluid such that the second heat transfer fluid is cooled. The second heat transfer fluid is subsequently transferred via the storage tank **6** and the second heat transfer fluid conduit **7** to the cooling circuit to cool the connected facilities and buildings, in particular depending on the cooling and heat control needs of the buildings.

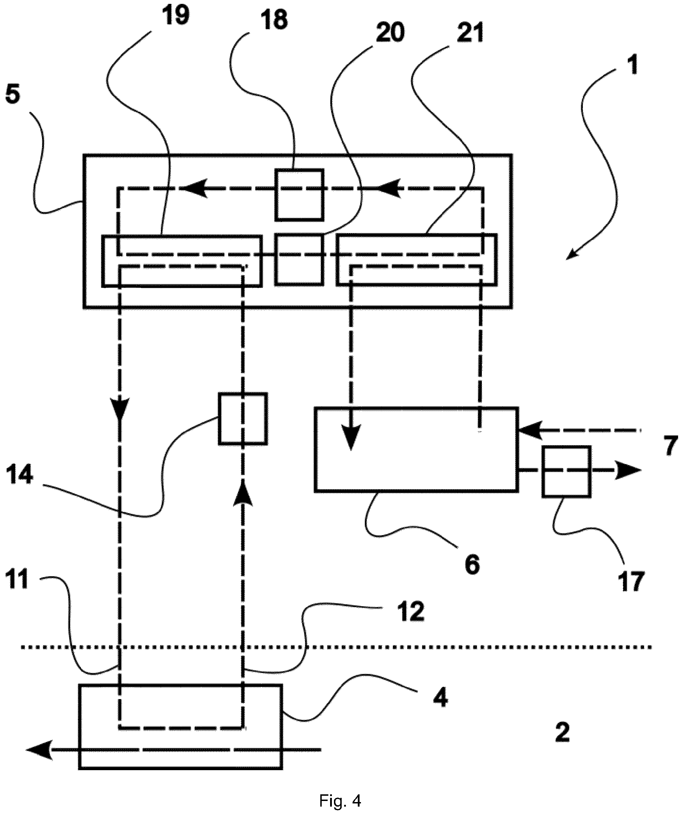

In the cooling generation according to Figure 4, heat is exchanged between the water body **2** and the first heat transfer fluid in the primary heat exchanger **4,** thereby heating the water body **2** and cooling the first heat transfer fluid by approximately 1 to 3 °C. Further, the first heat transfer fluid flows through the outlet **12** via the first circulating pump **14** into the heat pump **5,** where it is heated on the condenser **19** side and transfers the cooling via the circuit charge (coolant) of the heat pump **5** (e. g. CO₂ , NH₃) circulating through the expansion valve **20** to the second heat transfer fluid on the evaporator **21** side (i. e. removes heat from the second heat transfer fluid). The coolant of the heat pump **5** is routed back from the evaporator **21** to the condenser **19** side via the compressor **18,** thereby heating it. The heated first heat transfer fluid is routed from the heat pump **5** back to the primary heat exchanger **4** via the inlet **11,** where it is cooled again. The cooled second heat transfer fluid is routed from the heat pump **5** to the storage tank **6** and further to the cooling conduit **7.** In this case, the second heat transfer fluid circulates between the storage tank **6** and the heat pump **5** on the evaporator **21** side, and after reaching the desired cooling temperature is distributed to the conduit **7** by the second circulation pump **17.**

According to the above example, said plant **1** is capable of providing both heating and cooling at the same time, using multiple heat exchange circuits as described above simultaneously.

### Example 4

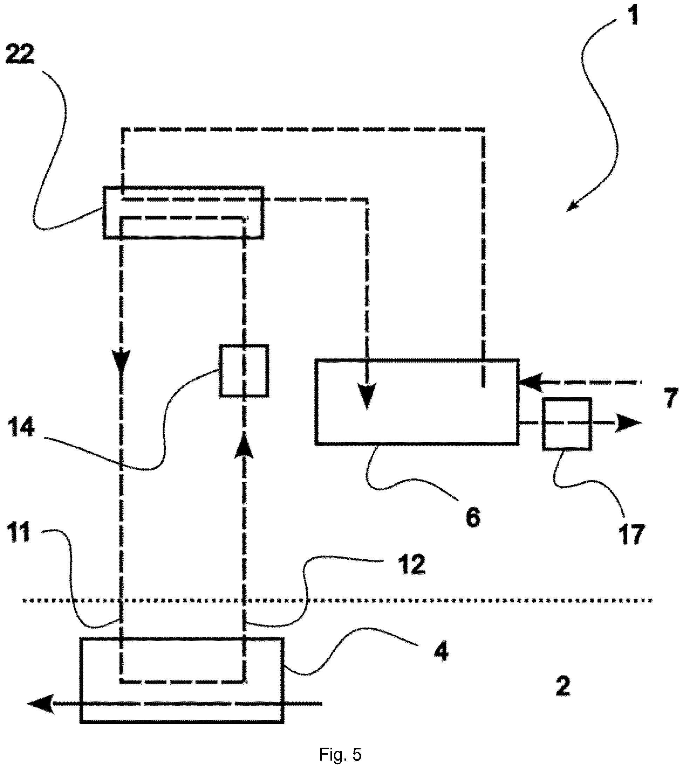

In another example embodiment according to Figure 5, a secondary heat exchanger **22** is used as a heat exchanging element, arranged between the circuit of the primary heat exchanger **4** and the circuit of the storage tank **6.** The secondary heat exchanger **22** serves in particular for heat transfer between the circuits without the need of added work of the heat pump, that is, if the required temperature for heating/cooling the building can only be achieved in the second heat transfer fluid by the temperature gradient from the water body **2** and the first heat transfer fluid, without the added work of the heat machine (heat pump). Both the secondary heat exchanger **22** and the at least one heat pump **5** may be part of the floating plant.

### Example 5

Example temperature parameters are given below. The temperature of the primary circuit depends mainly on the temperature of the water body (in winter approx. 2 to 6 °C, in summer approx. 15 to 20 °C, depending on the flow, the specific location, etc.) and a temperature difference of usually 3 °C is extracted from/received into the primary circuit (only if the water body temperature is below 4 °C is the temperature difference on the primary circuit less than 3 °C to prevent the water in the water body from freezing at the primary heat exchanger).

The simultaneous supply of heat/cooling at different temperature levels to the direct consumer or to the community heat/cooling distribution system is limited by the number of pipes of the primary heat exchanger - distribution channels. For a standard district heating system this is 2 pipes (supply/return), but 4 or 6 pipes (i. e. 2 or 3 circuits) or even more can be provided, depending on the actual demand in a specific location, as there can be up to about 6-10 storage tanks in a floating plant and each one can supply at a different heat level. The pipes/distribution channels can have different capacities depending on the diameter and flow rate. Typically, modern so-called 4th generation distribution systems deliver heat at two temperature levels in winter: 60/40 °C (for domestic hot water and conventional radiator heating) and 40/30 °C (for underfloor/low temperature area heating). The lower temperature level 40/30 has a lower unit energy because there is always less electricity consumption if the temperature difference between the environment and the heat transfer medium is lower. Typically, in summer, heat is supplied at a temperature level of 60/40 °C (for year-round domestic hot water heating) and cooling is supplied at a temperature level of 6/12 °C (for fan coil cooling) and/or 15/20 °C (for radiant ceiling cooling). The higher 15/20 temperature level indicated has a lower unit energy consumed because the water body temperature at the bottom is close to 15 °C and minimal or no heat pump work will be required to transfer it to the distribution system, or a secondary heat exchanger can be used instead of a heat pump.

### Example 6

An example calculation of the energy parameters is given for the Vltava River in Prague and the Danube River in Bratislava.

The Vltava River in Prague has an average flow of 150 m³/s, its cooling by only 1 °C means 627 MW of heat (i. e. 836 MW of heat from heat pumps at CoP 4, i. e. approximately 5 000 GWh/year), which represents the heating capacity for about 450 thousand households in Prague. The installed capacity of all Czech power plants is 20.8 GW. The Danube River in Bratislava has an average flow of 2 025 m³/s, cooling by 1 °C means 8.46 GW of heat i. e. 11.27 GW of heat from heat pumps (at COP 4) that is almost 2 times the installed capacity of all Slovak power plants (which is about 6 GW). Back by 1 °C the river will warm relatively quickly from solar radiation and heat from the environment and human activity (also through heat transfer from heated buildings and the effect of water treatment plants).

### Example 7

Several primary heat exchangers are preferably located on the floating plant (for serviceability, separability in case of failure and simultaneous production of heat and cooling). A standard example pontoon for use on the Vltava River has dimensions of 50 x 10 m, i. e. an area of 500 m² below the bottom and about 1-2 m height around (depending on the draft) i. e. another 120-240 m² . Several layers of tubes/plates are placed on this area - the heat transfer surface of the primary heat exchanger will be several thousand to tens of thousands of m². A standard example pontoon for use on the Danube River is 75 x 20 m, i. e. the total area of the installation is about 3 times larger. The basic parameter for the size/design of the heat exchanger is the required capacity of the plant (e. g. Vltava 10 MWt, Danube 40 MWt), other inputs are the flow rate at the site and the average water temperature in winter, which determines what temperature difference can be obtained from the water body for what period of time. The output of the primary heat exchanger to the required capacity can be obtained by sufficient heat transfer surface (i. e. by the number/shape/surface finish of the tubes/plates, which also depends on how deep the bottom of the water body is below the floating plant), the flow velocity and the inlet temperature of the antifreeze in the primary circuit - both of which are limited to some effective range - e. g. antifreeze temperature (glycol/water mixture) up to approx. -10 °C, flow max. 5 m/s). If sufficient primary heat exchanger performance is not achieved by the natural flow rate of the water body, it can be increased by placing the primary heat exchangers in open tubes, in which flow/sump pumps will be placed to accelerate the flow of ambient water from the water body and thus the performance of the primary heat exchanger.

Alternatively, additional primary heat exchangers can be located inside the floating system and the required output is achieved by pumping water through plate heat exchangers (which usually have several times more output per total volume than tube/plate heat exchangers located in the water body).

### Industrial applicability

The above-described floating plant can be used for heating and/or cooling of buildings and other heat/cooling points or for community heat/cooling distribution on land. A secondary and separate function of said plant is to create a community space or other functional space on board said plant - as part of public space at the shore of the water body.

### List of reference signs

1 floating plant
2 water body
3 hollow space
4 primary heat exchanger
5 heat pump
6 storage tank
7 second heat transfer fluid conduit (cooling or heat)
8 bivalence unit
9 top surface/deck
10 mooring
11 first heat transfer fluid inlet
12 first heat transfer fluid outlet
13 suction device
14 first circulation pump
15 connection of the storage tank 6 to the conduit 7 (cooling)
16 connection of the storage tank 6 to the conduit 7 (heat)
17 second circulation pump
18 compressor
19 condenser
20 expansion valve
21 evaporator
22 secondary heat exchanger

## Claims

1. A floating plant (1) for installing in a water body (2) and for introducing thermal energy into the water body (2) and for extracting thermal energy from the water body (2), comprising
a. hollow space (3) so that said plant (1) floats when installed in the water body (2);
b. at least one primary heat exchanger (4) which is at least partially immersed in the water body (2) after installation of said plant (1) in said water body (2) and which comprises a first heat transfer fluid inlet (11) and a first heat transfer fluid outlet (12) such that the first heat transfer fluid can flow through the primary heat exchanger (4) and can transfer heat energy to the water body (2) or can extract heat energy from the water body (2), wherein the primary heat exchanger (4) is arranged on the outside of said plant (1), in particular under the bottom and/or on the sides thereof;
c. at least one heat exchanging element, selected from the group comprising a secondary heat exchanger (22) and a heat pump (5), arranged within said plant (1), wherein the heat exchanging element is connected to the primary heat exchanger (4) such that the first heat transfer fluid can flow through the heat exchanging element while transferring heat energy to or extracting heat energy from a second heat transfer fluid; and
d. at least one storage tank (6) arranged within said plant (1),
**characterised in that** the storage tank (6) is connected to the heat exchanging element and is thermally insulated so that the second heat transfer fluid can be stored in the storage tank (6) while maintaining its temperature, and wherein the storage tank (6) is further connectable to a second heat transfer fluid conduit (7), wherein said conduit (7) is routed outside said plant (1).

2. The floating plant (1) according to claim 1, **characterised in that** the first heat transfer fluid is an antifreeze, in particular a mixture of glycol and water.

3. The floating plant (1) according to claim 1 or 2, **characterised in that** the second heat transfer fluid is degassed water suitable for direct distribution or community heating and/or cooling.

4. The floating plant (1) according to any one of the preceding claims, **characterised in that** the primary heat exchanger (4) comprises one or more regions of tubes and/or plates through which a first heat transfer fluid can flow and which, after installation of said plant (1), are immersed at least in regions in the water body (2).

5. The floating plant (1) according to any one of the preceding claims, **characterised in that** the primary heat exchanger (4) comprises one or more regions of tubes arranged inside at each end of an open tube provided with a flow pump for accelerating the flow of water from the water body.

6. The floating plant (1) according to any one of the preceding claims, **characterised in that** a first circulation pump (14) is arranged between the primary heat exchanger (4) and the heat exchanging element to provide circulation of the first heat transfer fluid.

7. The floating plant (1) according to any one of the preceding claims, **characterised in that** the connection to the second heat transfer fluid conduit (7) comprises at least one connection (15) of the storage tank (6) to a cooling conduit (7) and at least one connection (16) of the storage tank (6) to a heat conduit (7), wherein said conduits (7) are routed outside said plant (1).

8. The floating plant (1) according to any one of the preceding claims, **characterised in that** it comprises a suction device (13) for immersion in the water body (2), the suction device being adapted to suck water from the water body (2) into the space of the primary heat exchanger (4) and to create a flow of water from the water body (2) in the primary heat exchanger space (4).

9. The floating plant (1) according to any one of the preceding claims, **characterised in that** it comprises a protective lining for immersion in the water body (2), which covers on at least one side the primary heat exchanger (4) immersed in the water body (2).

10. The floating plant (1) according to any one of the preceding claims, **characterised in that** it further comprises a bivalence unit (8) for supplying electricity to said plant (1), wherein said bivalence unit (8) is preferably formed as a cogeneration unit for burning fuel, in particular bioethanol or biogas.

11. The floating plant (1) according to any one of the preceding claims, **characterised in that** the storage tank (6) is connectable via a second circulating pump (17) to the second heat transfer fluid conduit (7) by means of an articulated and/or telescopic mooring (10).

12. The floating plant (1) according to any one of the preceding claims, **characterised in that** its top surface (9) covers both the heat exchanging element and the storage tank (6) and is constructed as a pontoon, deck, pier, floating island, quay extension or houseboat.

13. The floating plant (1) according to any one of the preceding claims, **characterised in that** it comprises at least one additional primary heat exchanger (4) arranged within said plant (1), wherein the additional primary heat exchanger (4) is a plate heat exchanger.

14. A method of heating a building on land by means of said floating plant (1) according to any one of claims 1 to 13, the method comprising the steps of:
a. installing said plant (1) in the water body (2) such that the primary heat exchanger (4) is immersed in the water body;
b. connecting said plant (1) to the second heat transfer fluid conduit (7), in particular to the heat conduit (7) outside said plant (1); and
c. at least temporarily moving the first heat transfer fluid in the primary heat exchanger (4) to transfer heat from the water body (2) to the heat exchanging element, wherein heat energy is transferred from the water body (2) to the first heat transfer fluid and subsequently from the first heat transfer fluid to the second heat transfer fluid via the heat exchanging element such that the second heat transfer fluid is heated, wherein the second heat transfer fluid is transferred directly or via a storage tank (6) and then via the second heat transfer fluid conduit (7) to a heating circuit of the building so as to heat the building, in particular depending on the need for temperature control in the building.

15. A method of cooling a building on land by means of said floating plant (1) according to any one of claims 1 to 13, the method comprising the steps of:
a. installing said plant (1) in the water body (2) such that the primary heat exchanger (4) is immersed in the water body;
b. connecting said plant (1) to the second heat transfer fluid conduit (7), in particular to the cooling conduit (7) outside said plant (1); and
c. at least temporarily moving the first heat transfer fluid in the primary heat exchanger (4) to transfer heat from the heat exchanging element to the water body (2), wherein heat energy is transferred from the first heat transfer fluid to the water body (2) and subsequently via the heat exchanging element from the second heat transfer fluid to the first heat transfer fluid such that the second heat transfer fluid is cooled, wherein the second heat transfer fluid is transferred directly or via a storage tank (6) and further via a second heat transfer fluid conduit (7) to a cooling circuit of the building so as to cool the building, in particular depending on the need for temperature control in the building.

## Patentansprüche

1. Eine Schwimmvorrichtung (1) zum Einsetzen in ein Gewässer (2) und zum Einbringen von Wärmeenergie in das Gewässer (2) sowie zum Entziehen von Wärmeenergie aus dem Gewässer (2), umfassend
a. einen Hohlraum (3), so dass die Vorrichtung (1) nach dem Einsetzen in das Gewässer schwimmt;
b. mindestens einen primären Wärmetauscher (4), der nach dem Einsetzen der Vorrichtung (1) in das Gewässer zumindest teilweise in das Gewässer (2) eintaucht, und der einen Zulauf (11) für eine erste Wärmeträgerflüssigkeit und einen Ablauf (12) für die erste Wärmeträgerflüssigkeit umfasst, so dass die erste Wärmeträgerflüssigkeit durch den primären Wärmetauscher (4) strömen und hierbei Wärmeenergie an das Gewässer (2) abgeben oder dem Gewässer (2) Wärmeenergie entziehen kann, wobei der primäre Wärmetauscher (4) an der Außenseite der Vorrichtung (1) angeordnet ist, insbesondere unterhalb des Bodens und/oder an den Seiten davon;
c. mindestens ein Wärmeübertragungselement, ausgewählt aus der Gruppe umfassend einen sekundären Wärmetauscher (22) und eine Wärmepumpe (5), das innerhalb der Vorrichtung (1) angeordnet ist, wobei das Wärmeübertragungselement mit dem primären Wärmetauscher (4) verbunden ist, so dass die erste Wärmeträgerflüssigkeit durch das Wärmeübertragungselement strömen und hierbei Wärmeenergie an eine zweite Wärmeträgerflüssigkeit abgeben oder der zweiten Wärmeträgerflüssigkeit Wärmeenergie entziehen kann; und
d. mindestens einen Speicherbehälter (6), der innerhalb der Vorrichtung (1) angeordnet ist,
**dadurch gekennzeichnet, dass** der Speicherbehälter (6) mit dem Wärmeübertragungselement verbunden ist und thermisch isoliert ist, so dass die zweite Wärmeträgerflüssigkeit in dem Speicherbehälter (6) gespeichert sein kann, während seine Temperatur beibehalten wird, und wobei der Speicherbehälter (6) ferner mit einer Verteilungsleitung (7) für die zweite Wärmeträgerflüssigkeit verbindbar ist, wobei die Verteilungsleitung (7) außerhalb der Vorrichtung (1) verlegt ist.

2. Die Schwimmvorrichtung (1) nach Anspruch 1, **dadurch gekennzeichnet, dass** die erste Wärmeträgerflüssigkeit ein Frostschutzmittel ist, insbesondere ein Gemisch aus Glykol und Wasser.

3. Die Schwimmvorrichtung (1) nach Anspruch 1 oder 2, **dadurch gekennzeichnet, dass** die zweite Wärmeträgerflüssigkeit entgastes Wasser ist, das zur direkten Verteilung oder zur gemeinschaftlichen Wärme- und/oder Kälteversorgung geeignet ist.

4. Die Schwimmvorrichtung (1) nach einem der vorhergehenden Ansprüche, **dadurch gekennzeichnet, dass** der primäre Wärmetauscher (4) einen oder mehrere Bereiche aus Rohren und/oder Platten umfasst, durch die die erste Wärmeträgerflüssigkeit strömen kann und die nach dem Einsetzen der Vorrichtung (1) zumindest bereichsweise in das Gewässer (2) eingetaucht sind.

5. Die Schwimmvorrichtung (1) nach einem der vorhergehenden Ansprüche, **dadurch gekennzeichnet, dass** der primäre Wärmetauscher (4) einen oder mehrere Bereiche von Rohren umfasst, die im Inneren an jedem Ende eines offenen Rohrs angeordnet sind, das mit einer Strömungspumpe zur Beschleunigung des Wasserflusses aus dem Gewässer versehen ist.

6. Die Schwimmvorrichtung (1) nach einem der vorhergehenden Ansprüche, **dadurch gekennzeichnet, dass** eine erste Umwälzpumpe (14) zwischen dem primären Wärmetauscher (4) und dem Wärmeübertragungselement angeordnet ist, um die Zirkulation der ersten Wärmeträgerflüssigkeit zu gewährleisten.

7. Die Schwimmvorrichtung (1) nach einem der vorhergehenden Ansprüche, **dadurch gekennzeichnet, dass** die Verbindung mit der Verteilungsleitung (7) der zweiten Wärmeträgerflüssigkeit mindestens einen Anschluss (15) des Speicherbehälters (6) an die Kälteverteilungsleitung (7) und mindestens einen Anschluss (16) des Speicherbehälters (6) an die Wärmeverteilungsleitung (7) umfasst, wobei die Leitungen (7) außerhalb der Vorrichtung (1) verlegt sind.

8. Die Schwimmvorrichtung (1) nach einem der vorhergehenden Ansprüche, **dadurch gekennzeichnet, dass** sie eine Saugvorrichtung (13) zum Eintauchen in das Gewässer (2) umfasst, um Wasser aus dem Gewässer (2) in den Raum des primären Wärmetauschers (4) anzusaugen und um einen Wasserstrom aus dem Gewässer (2) in den Raum des primären Wärmetauschers (4) zu erzeugen.

9. Die Schwimmvorrichtung (1) nach einem der vorhergehenden Ansprüche, **dadurch gekennzeichnet, dass** sie eine Schutzauskleidung zum Eintauchen in das Gewässer (2) umfasst, die den in das Gewässer (2) eingetauchten primären Wärmetauscher (4) auf mindestens einer Seite abdeckt.

10. Die Schwimmvorrichtung (1) nach einem der vorhergehenden Ansprüche, **dadurch gekennzeichnet, dass** sie ferner eine Bivalenzeinheit (8) zur Stromversorgung der Vorrichtung (1) umfasst, wobei die Bivalenzeinheit (8) vorzugsweise als Kraft-Wärme-Kopplungseinheit zur Verbrennung von Brennstoff, insbesondere Bioethanol oder Biogas, ausgebildet ist.

11. Die Schwimmvorrichtung (1) nach einem der vorhergehenden Ansprüche, **dadurch gekennzeichnet, dass** der Speicherbehälter (6) über eine zweite Umwälzpumpe (17) mittels einer gelenkigen und/oder teleskopischen Verankerung (10) an die Verteilungsleitung (7) der zweiten Wärmeträgerflüssigkeit anschließbar ist.

12. Die Schwimmvorrichtung (1) nach einem der vorhergehenden Ansprüche, **dadurch gekennzeichnet, dass** ihre Oberseite (9) das Wärmeübertragungselement sowie den Speicherbehälter (6) bedeckt und als Ponton, Deck, Pier, schwimmende Insel, Uferverlängerung oder Hausboot ausgebildet ist.

13. Die Schwimmvorrichtung (1) nach einem der vorhergehenden Ansprüche, **dadurch gekennzeichnet, dass** sie mindestens einen zusätzlichen primären Wärmetauscher (4) umfasst, der innerhalb der Vorrichtung (1) angeordnet ist, wobei der zusätzliche primäre Wärmetauscher (4) ein Plattenwärmetauscher ist.

14. Ein Verfahren zum Beheizen eines Gebäudes auf dem Land durch die Schwimmvorrichtung (1) nach einem der Ansprüche 1 bis 13, wobei das Verfahren die folgenden Schritte umfasst:
a. das Einsetzen der Vorrichtung (1) in einem Gewässer (2), so dass der primäre Wärmetauscher (4) in das Gewässer eingetaucht ist;
b. der Anschluss der Vorrichtung (1) an eine Verteilungsleitung (7) der zweiten Wärmeträgerflüssigkeit, insbesondere an eine Wärmeverteilungsleitung (7), die außerhalb der Vorrichtung (1) verlegt ist; und
c. zumindest zeitweilige Bewegung der ersten Wärmeträgerflüssigkeit im primären Wärmetauscher (4) zur Übertragung von Wärme aus dem Gewässer (2) an das Wärmeübertragungselement, wobei Wärmeenergie vom Gewässer (2) an die erste Wärmeträgerflüssigkeit und anschließend von der ersten Wärmeträgerflüssigkeit über das Wärmeübertragungselement an die zweite Wärmeträgerflüssigkeit übertragen wird, so dass die zweite Wärmeträgerflüssigkeit erwärmt wird, wobei die zweite Wärmeträgerflüssigkeit direkt oder über einen Speicherbehälter (6) und dann über die Verteilungsleitung (7) der zweiten Wärmeträgerflüssigkeit an einen Heizkreislauf des Gebäudes übertragen wird, um das Gebäude zu beheizen, insbesondere in Abhängigkeit von der Notwendigkeit der Temperaturregelung im Gebäude.

15. Ein Verfahren zur Kühlung eines Gebäudes auf dem Land durch die Schwimmvorrichtung (1) nach einem der Ansprüche 1 bis 13, wobei das Verfahren die folgenden Schritte umfasst:
a. das Einsetzen der Vorrichtung (1) in einem Gewässer (2), so dass der primäre Wärmetauscher (4) in das Gewässer (2) eingetaucht ist;
b. der Anschluss der Vorrichtung (1) an die Verteilungsleitung (7) der zweiten Wärmeträgerflüssigkeit, insbesondere an die Kälteverteilungsleitung (7), die außerhalb der Vorrichtung verlegt ist; und
c. zumindest zeitweilige Bewegung der ersten Wärmeträgerflüssigkeit im primären Wärmetauscher (4) zur Übertragung von Kälte aus einem Wärmeübertragungselement an das Gewässer (2), wobei Wärmeenergie von der ersten Wärmeträgerflüssigkeit an das Gewässer (2) und anschließend von der zweiten Wärmeträgerflüssigkeit über das Wärmeübertragungselement an die erste Wärmeträgerflüssigkeit übertragen wird, so dass die zweite Wärmeträgerflüssigkeit gekühlt wird, wobei die zweite Wärmeträgerflüssigkeit direkt oder über einen Speicherbehälter (6) und dann über die Verteilungsleitung (7) der zweiten Wärmeträgerflüssigkeit an einen Kühlkreislauf des Gebäudes übertragen wird, um das Gebäude zu kühlen, insbesondere in Abhängigkeit von der Notwendigkeit der Temperaturregelung im Gebäude.

## Revendications

1. Une installation flottante (1) destinée à être installée dans un corps d'eau (2) et destinée à introduire de l'énergie thermique dans le corps d'eau (2) et à extraire de l'énergie thermique du corps d'eau (2), comprenant
a. un espace creux (3) de sorte que ladite installation (1) flotte lorsqu'elle est installée dans le corps d'eau (2) ;
b. au moins un échangeur de chaleur primaire (4) qui est au moins partiellement immergé dans le corps d'eau (2) après installation de ladite installation (1) dans ledit corps d'eau (2) et qui comprend une entrée de premier fluide caloporteur (11) et une sortie de premier fluide caloporteur (12) de sorte que le premier fluide caloporteur puisse s'écouler à travers l'échangeur de chaleur primaire (4) et puisse transférer de l'énergie thermique vers le corps d'eau (2) ou extraire de l'énergie thermique du corps d'eau (2), où l'échangeur de chaleur primaire (4) est disposé à l'extérieur de ladite installation (1), notamment sous le fond et/ou sur ses côtés ;
c. au moins un élément d'échange de chaleur, choisi dans le groupe comprenant un échangeur de chaleur secondaire (22) et une pompe à chaleur (5), disposé à l'intérieur de ladite installation (1), où l'élément d'échange de chaleur est relié à l'échangeur de chaleur primaire (4) de telle sorte que le premier fluide caloporteur puisse s'écouler à travers l'élément d'échange de chaleur tout en transférant de l'énergie thermique vers ou en extrayant de l'énergie thermique à partir d'un second fluide caloporteur; et
d. au moins un réservoir de stockage (6) disposé à l'intérieur de ladite installation (1),
**caractérisée en ce que** le réservoir de stockage (6) est relié à l'élément d'échange de chaleur et est isolé thermiquement de telle sorte que le second fluide caloporteur puisse être stocké dans le réservoir de stockage (6) tout en maintenant sa température, et où le réservoir de stockage (6) peut en outre être relié à un conduit de second fluide caloporteur (7), où ledit conduit (7) est acheminé à l'extérieur de ladite installation (1).

2. L'installation flottante (1) selon la revendication 1, **caractérisée en ce que** le premier fluide caloporteur est un antigel, en particulier un mélange de glycol et d'eau.

3. L'installation flottante (1) selon la revendication 1 ou 2, **caractérisée en ce que** le second fluide caloporteur est de l'eau dégazée adaptée pour une distribution directe ou un chauffage et/ou un refroidissement communautaire.

4. L'installation flottante (1) selon l'une quelconque des revendications précédentes, **caractérisée en ce que** l'échangeur de chaleur primaire (4) comprend une ou plusieurs zones de tubes et/ou de plaques à travers lesquelles un premier fluide caloporteur peut s'écouler et qui, après installation de ladite installation (1), sont immergées au moins dans des zones dans le corps d'eau (2).

5. L'installation flottante (1) selon l'une quelconque des revendications précédentes, **caractérisée en ce que** l'échangeur de chaleur primaire (4) comprend une ou plusieurs zones de tubes disposées à l'intérieur à chaque extrémité d'un tube ouvert muni d'une pompe de circulation pour accélérer le flux d'eau du corps d'eau.

6. L'installation flottante (1) selon l'une quelconque des revendications précédentes, **caractérisée en ce qu'**une première pompe de circulation (14) est disposée entre l'échangeur de chaleur primaire (4) et l'élément d'échange de chaleur pour faire circuler le premier fluide caloporteur.

7. L'installation flottante (1) selon l'une quelconque des revendications précédentes, **caractérisée en ce que** la connexion au conduit de second fluide caloporteur (7) comprend au moins une connexion (15) du réservoir de stockage (6) à un conduit de refroidissement (7) et au moins une connexion (16) du réservoir de stockage (6) à un conduit de chaleur (7), où lesdits conduits (7) sont acheminés à l'extérieur de ladite installation (1).

8. L'installation flottante (1) selon l'une quelconque des revendications précédentes, **caractérisée en ce qu'**elle comprend un dispositif d'aspiration (13) pour être immergé dans le corps d'eau (2), où le dispositif d'aspiration est adapté pour aspirer de l'eau du corps d'eau (2) dans l'espace de l'échangeur de chaleur primaire (4) et pour créer un écoulement d'eau à partir du corps d'eau (2) dans l'espace d'échangeur de chaleur primaire (4).

9. L'installation flottante (1) selon l'une quelconque des revendications précédentes, **caractérisée en ce qu'**elle comprend une garniture de protection pour immersion dans le corps d'eau (2), qui recouvre sur au moins un côté l'échangeur de chaleur primaire (4) immergé dans le corps d'eau (2).

10. L'installation flottante (1) selon l'une quelconque des revendications précédentes, **caractérisée en ce qu'**elle comprend en outre une unité de bivalence (8) pour fournir de l'électricité à ladite installation (1), où ladite unité de bivalence (8) est de préférence formée en tant qu'unité de cogénération pour brûler du combustible, en particulier du bioéthanol ou du biogaz.

11. L'installation flottante (1) selon l'une quelconque des revendications précédentes, **caractérisée en ce que** le réservoir de stockage (6) est connectable par une seconde pompe de circulation (17) au conduit de second fluide caloporteur (7) au moyen d'un amarrage articulé et/ou télescopique (10).

12. L'installation flottante (1) selon l'une quelconque des revendications précédentes, **caractérisée en ce que** sa surface supérieure (9) recouvre à la fois l'élément d'échange de chaleur et le réservoir de stockage (6) et est construite en ponton, pont, pilier, îlot flottant, extension de quai ou ménage.

13. L'installation flottante (1) selon l'une quelconque des revendications précédentes, **caractérisée en ce qu'**elle comprend au moins un échangeur de chaleur primaire additionnel (4) disposé dans ladite installation (1), dans laquelle l'échangeur de chaleur primaire additionnel (4) est un échangeur de chaleur à plaques.

14. Un procédé de chauffage d'un bâtiment à terre au moyen de ladite installation flottante (1) selon l'une quelconque des revendications 1 à 13, le procédé comprenant les étapes de :
a. installer ladite installation (1) dans le corps d'eau (2) de sorte que l'échangeur de chaleur primaire (4) soit immergé dans le corps d'eau ;
b. relier ladite installation (1) au conduit de second fluide caloporteur (7), en particulier au conduit de chaleur (7) à l'extérieur de ladite installation (1) ; et
c. au moins temporairement déplacer le premier fluide caloporteur dans l'échangeur de chaleur primaire (4) pour transférer de la chaleur du corps d'eau (2) vers l'élément d'échange de chaleur, où de l'énergie thermique est transférée du corps d'eau (2) au premier fluide caloporteur et ensuite du premier fluide caloporteur au second fluide caloporteur par l'élément d'échange de chaleur de sorte que le second fluide caloporteur soit chauffé, où le second fluide caloporteur est transféré directement ou par un réservoir de stockage (6) et puis par le conduit de second fluide caloporteur (7) vers un circuit de chauffage du bâtiment de manière à chauffer le bâtiment, notamment en fonction du besoin de contrôle de température dans le bâtiment.

15. Un procédé de refroidissement d'un bâtiment à terre au moyen de ladite installation flottante (1) selon l'une quelconque des revendications 1 à 13, le procédé comprenant les étapes de :
a. installer ladite installation (1) dans le corps d'eau (2) de sorte que l'échangeur de chaleur primaire (4) soit immergé dans le corps d'eau ;
b. relier ladite installation (1) au conduit de second fluide caloporteur (7), en particulier au conduit de refroidissement (7) à l'extérieur de ladite installation (1) ; et
c. au moins temporairement déplacer le premier fluide caloporteur dans l'échangeur de chaleur primaire (4) pour transférer de la chaleur de l'élément d'échange de chaleur au corps d'eau (2), où de l'énergie thermique est transférée du premier fluide caloporteur au corps d'eau (2) et ensuite par l'élément d'échange de chaleur du second fluide caloporteur au premier fluide caloporteur de telle sorte que le second fluide caloporteur soit refroidi où le second fluide caloporteur est transféré directement ou par un réservoir de stockage (6) et puis par le conduit de second fluide caloporteur (7) vers un circuit de refroidissement du bâtiment de manière à refroidir le bâtiment, en particulier en fonction du besoin de régulation de température dans le bâtiment.
